# EUROPEAN PATENT SPECIFICATION

(11) **EP 2 045 137 B1**
(45) Date of publication and mention of the grant of the patent: **30.11.2011**
(21) Application number: 08165867.6
(22) Date of filing: 03.10.2008
(51) Int. Cl.: B60R 7/04, B60R 7/12

(54) **Cover for a structural sill portion of a vehicle**
Abdeckung für einen strukturellen Schwellerabschnitt eines Fahrzeugs
Couvercle pour une portion de seuil structurel d'un véhicule

(30) Priority: 05.10.2007 IT TO20070705
(43) Date of publication of application: 08.04.2009
(73) Proprietor: C.R.F. SOCIETÀ CONSORTILE PER AZIONI, 10043 Orbassano (IT)
(72) Inventor: Boreanaz, Giovanni, 10043 Orbassano (IT); Fino, Federica, 10043 Orbassano (IT); Storgato, Angelo, 10043 Orbassano (IT)
(74) Representative: Jorio, Paolo

(56) References cited:
- EP-A1- 0 036 675
- WO-A1-02/12021
- DE-A1- 10 062 162
- DE-U1- 9 410 991
- JP-A- 8 104 183
- JP-A- 11 301 360
- JP-A- 2001 063 636

## Description

The present invention relates to a cover for a structural sill portion of a vehicle.

More specifically, the present invention relates to a cover, commonly known as a sill board, for covering a sill portion placed below of a front door of a vehicle, or the sill portion of the door opening.

In vehicles in general, and particularly cars, a need is felt for an elongated storage compartment between a front seat and the corresponding door, in which to keep items required when getting out of the vehicle, such as an umbrella, electric torch, etc.

An elongated storage compartment closed by a rotating lid is disclosed in WO 02/12021.

It is an object of the present invention to provide a cover for a structural portion of a vehicle, designed to meet this requirement cheaply and easily, and with no alterations required to the geometry or dimensions of the structural portion.

According to the present invention, there is provided a cover for a structural sill portion of a vehicle as claimed in claim 1.

A non-limiting embodiment of the invention will be described by way of example with reference to the accompanying drawings, in which:
Figure 1 shows a view in perspective of a preferred embodiment of the cover according to the present invention and covering a front sill portion of a vehicle shown partly;
Figures 2 and 3 show larger-scale views of a detail of the Figure 1 cover in two different operating positions;
Figure 4 shows a larger-scale section along line IV-IV in Figure 3.

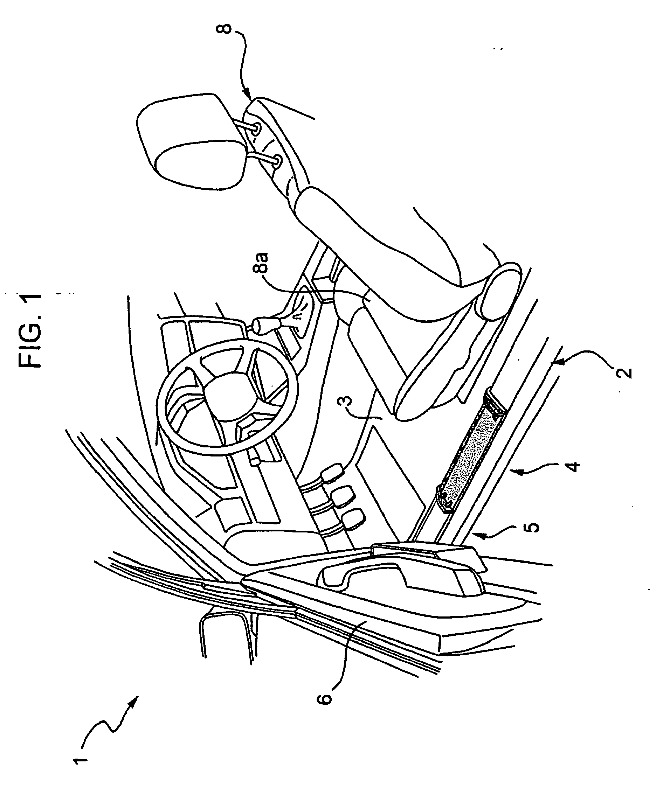

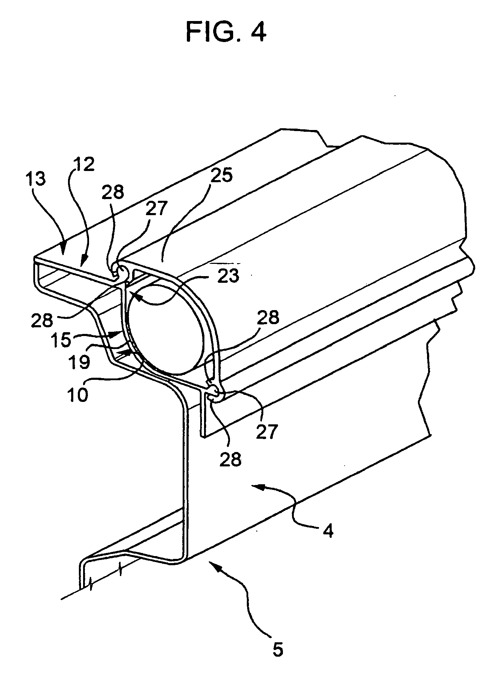

Number 1 in Figure 1 indicates as a whole a vehicle comprising a floor 2, in turn comprising a bottom panel 3, and a peripheral reinforcing ridge 4. Peripheral ridge 4 comprises two contoured longitudinal structural reinforcing portions 5, each of which extends beneath a front door 6 of vehicle 1, is known as a sill, and, as shown in detail in Figure 4, comprises a continuous, open-topped, longitudinally elongated recess 10 on the side facing a relative front seat 8 (Figure 1).

Each longitudinal portion 5 is at least partly covered by an elongated cover 12 which is separate from longitudinal portion 5, is made of plastic or equivalent finishing material, and extends on a level with the driver's or passenger's ankle.

Each cover 12 comprises a continuous outer platelike portion 13; two L-shaped end portions 14; and a concave intermediate portion 15 extending between end portions 14 and inside an intermediate portion of recess 10 defined by longitudinal portion 5.

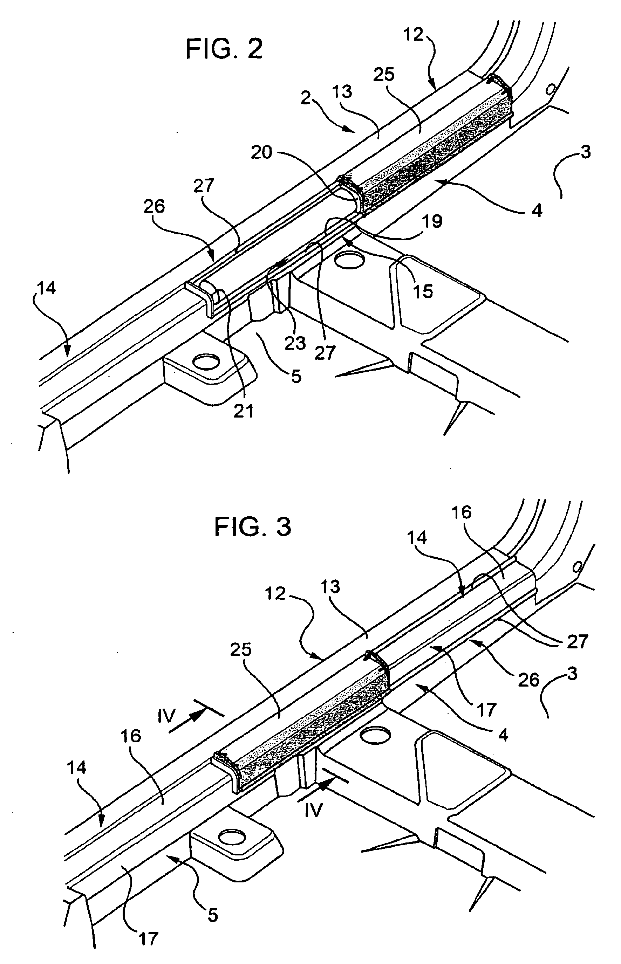

With reference to Figure 3, each end portion 14 in turn comprises a top platelike portion 16 adjacent to and integral with portion 13; and an inner platelike portion 17 extending towards bottom panel 3. Concave portion 15 comprises a curved wall 19; and two facing intermediate partitions 20 and 21 which, together with wall 19 and portions 13 and 14, form part of a one-piece body. Partitions 20, 21 and wall 19 define a longitudinally elongated compartment 23 adjacent to or alongside the seat portion 8a of relative front seat 8.

Compartment 23 is closed by an elongated convex lid 25 which is conveniently L-shaped with a rounded outer edge, and is fitted to a straight runner 26 to slide axially in opposite directions between a closed position closing compartment 23, and in which it rests against an outer peripheral portion of partition 21 projecting from relative L-shaped portion 14, and an open position, in which it is completely superimposed on portion 14 to allow free access to compartment 23.

In the example described, runner 26 comprises two cylindrical longitudinal ribs 27 integral partly with the opposite longitudinal edges of wall 19, and partly with the opposite longitudinal edges of one of the two L-shaped portions 14. Lid 25 comprises, for each rib 27, an elongated peripheral portion defined by two facing appendixes 28 (Figure 4) defining a slide seat into which relative rib 27 clicks.

In a variation not shown, the runner is replaced with a hinge with a longitudinal or transverse hinge axis.

As will be clear from the above description, forming a compartment defined entirely by an intermediate portion of the sill board provides a storage compartment next to the seat portion of one or both of the front seats at very little cost and, above all, with no need for altering the structural parts and/or for additional component parts other than those already on the vehicle. In fact, the hollow intermediate portion of the sill board, which according to the present invention defines the whole storage compartment, is located in a recess in the existing sills.

Compartment 23 and lid 25 are sized and shaped to form a compartment suitable for any type of object, though conveniently for long, substantially cylindrical objects, such as an umbrella or an electric torch or both. As will be clear from the above description, the compartment defined by the intermediate portion of the sill board may obviously be of a different size and shape from those indicated by way of example, and may be divided into sections by longitudinal and/or transverse partitions, still with no need for altering the existing sheet metal sill structure or the door itself.

Using a sliding convex lid fitted to the rest of the cover makes optimum use of the available space alongside the seat, allows ready access to the compartment from both inside and outside the vehicle, and provides for removing and replacing objects easily.

Also, using a sliding convex lid in no way hinders getting in and out of the vehicle.

## Claims

1. A cover (12) for a structural sill portion (5) of a vehicle; the cover (12) comprising a cover portion (14) at least partly covering and connected firmly to said structural portion, at least one concave portion (15) completely defining at least one elongated storage compartment (23), and
a convex lid (25) closing said compartment (23), and means (26) permitting relative motion and interposed between said lid (25) and said cover portion to allow the lid (25) to move between an open position and a closed position respectively opening and closing said compartment (23),
**characterized in that**, in said open position, said lid (25) at least overlaps said cover portion (14)
**characterized in that** said means permitting relative

2. A cover as claimed in Claim 1, **characterized in that** said concave portion (15) comprises a curved lateral wall and two facing end walls (20) (21) designed to fit inside an outer recess (10), of said structural portion (5).

3. A cover as claimed in Claim 2, **characterized in that** said curved lateral wall, said end walls, and said cover portion form part of a one-piece body.

4. A cover as claimed in Claim 1, **characterized in that** said means (26) permitting relative motion comprise a slide-runner assembly by which to move said lid (25) in a straight direction between said open and said closed position.

5. A cover as claimed in Claim 4, **characterized in that** said slide-runner assembly comprises a runner (27) integral with said cover portion; and a slide (28) carried by said lid (25) and which clicks onto said runner.

6. A cover as claimed in any one of the foregoing Claims, **characterized in that** said lid (25) has a substantially L-shaped cross section.

7. A vehicle (1) comprising a front door (6) for access to a passenger compartment of the vehicle; a structural portion (5) located beneath said door; and a cover (12) covering said structural portion (5) and comprising a portion (14) at least partly covering and connected firmly to said structural portion and defined as in Claim 1.

8. A vehicle as claimed in Claim 7, **characterized in that** said structural portion (5) defines an elongated outer recess (10), and said concave portion (15) comprises a curved lateral wall and two end walls housed inside said elongated outer recess (10) of said structural portion (5).

## Patentansprüche

1. Abdeckung (12) für ein Schweller-Bauelement (5) eines Fahrzeugs, wobei die Abdeckung (12) folgendes aufweist:
einen Abdeckungsbereich (14), der das Bauelement zumindest teilweise bedeckt und fest mit dem Bauelement verbunden ist,
mindestens einen konkaven Bereich (15), der mindestens ein langgestrecktes Speicherabteil (23) vollständig bildet, und
einen konvexen Deckel (25), der das Abteil (23) verschließt, sowie eine Einrichtung (26), die eine Relativbewegung ermöglicht und zwischen dem Deckel (25) und dem Abdeckungsbereich angeordnet ist, um es dem Deckel (25) zu ermöglichen, sich zwischen einer offenen Stellung und einer geschlossenen Stellung zu bewegen, um das Abteil (23) zu öffnen bzw. zu schließen,
**dadurch gekennzeichnet,**
**dass** der Deckel (25) in der offenen Stellung den Abdeckungsbereich (14) zumindest teilweise überlappt.

2. Abdeckung nach Anspruch 1,
**dadurch gekennzeichnet,**
**dass** der konkave Bereich (15) eine gekrümmte Seitenwand und zwei gegenüberliegende Stirnwände (20, 21) aufweist, die so ausgebildet sind, dass sie in eine äußere Aussparung (10) des Bauelements (5) passen.

3. Abdeckung nach Anspruch 2,
**dadurch gekennzeichnet,**
**dass** die gekrümmte Seitenwand, die Stirnwände und der Abdeckungsbereich Teile eines einstückigen Körpers bilden.

4. Abdeckung nach Anspruch 1,
**dadurch gekennzeichnet,**
**dass** die Einrichtung (26), die eine Relativbewegung ermöglicht, eine Gleitschienen-Anordnung aufweist, mit der der Deckel (25) in einer geraden Richtung zwischen der offenen Stellung und der geschlossenen Stellung bewegbar ist.

5. Abdeckung nach Anspruch 4,
**dadurch gekennzeichnet,**
**dass** die Gleitschienen-Anordnung eine Gleitschiene (27), die integral mit dem Abdeckungsbereich ausgebildet ist, und ein Gleitstück (28) aufweist, das von dem Deckel (25) getragen ist und auf der Gleitschiene einrastbar ist.

6. Abdeckung nach einem der vorhergehenden Ansprüche,
**dadurch gekennzeichnet,**
**dass** der Deckel (25) einen im wesentlichen L-förmigen Querschnitt besitzt.

7. Fahrzeug (1), das folgendes aufweist:
eine Fronttür (6) für den Zugang zum Fahrzeuginsassenabteil des Fahrzeugs;
ein Bauelement (5), das unterhalb der Tür angeordnet ist; und
eine Abdeckung (12), welche das Bauelement (5) bedeckt und einen Bereich (14) aufweist, der das Bauelement zumindest teilweise bedeckt und fest mit diesem verbunden ist und gemäß der Definition im Anspruch 1 ausgebildet ist.

8. Fahrzeug nach Anspruch 7,
**dadurch gekennzeichnet,**
**dass** das Bauelement (5) eine langgestreckte äußere Aussparung (10) bildet und dass der konkave Bereich (15) eine gekrümmte Seitenwand sowie zwei Stirnwände aufweist, die im Inneren der langgestreckten Aussparung (10) des Bauelements (5) untergebracht sind.

## Revendications

1. Couvercle (12) pour une portion de seuil structurel (5) d'un véhicule; le couvercle (12) comprenant une portion de couvercle (14) recouvrant au moins partiellement et connectée solidement à ladite portion structurelle ; au moins une portion concave (15) définissant complètement au moins un compartiment de stockage allongé (23), et
un couvercle convexe (25) fermant ledit compartiment (23) et un moyen (26) permettant un mouvement relatif et interposé entre ledit couvercle (25) et ladite portion de couvercle pour permettre le déplacement du couvercle (25) entre une position ouverte et une position fermée ouvrant et fermant respectivement ledit compartiment (23),
**caractérisé en ce que**, dans ladite position ouverte, ledit couvercle (25) chevauche au moins ladite portion de couvercle (14).

2. Couvercle selon la revendication 1, **caractérisé en ce que** ladite portion concave (15) comprend une paroi latérale recourbée et deux parois terminales faisant face (20) (21) conçues pour se loger à l'intérieur d'un réduit externe (10) de ladite portion structurelle (5).

3. Couvercle selon la revendication 2, **caractérisé en ce que** ladite paroi latérale recourbée, lesdites parois terminales et ladite portion de couvercle font partie d'une carrosserie d'une seule pièce.

4. Couvercle selon la revendication 1, **caractérisé en ce que** ledit moyen (26) permettant un mouvement relatif comprend un assemblage de curseur coulissant par lequel ledit couvercle (25) se déplace dans une direction droite entre ladite position ouverte et ladite position fermée.

5. Couvercle selon la revendication 4, **caractérisé en ce que** ledit assemblage de curseur coulissant comprend un curseur (27) partie intégrante de ladite portion de couvercle ; et un rail de coulissage (28) transporté par ledit couvercle (25) qui s'encliquette sur ledit curseur.

6. Couvercle selon l'une quelconque des revendications précédentes, **caractérisé en ce que** ledit couvercle (25) a une section transversale sensiblement en forme de L.

7. Véhicule (1) comprenant une portière avant (6) pour l'accès au compartiment passager du véhicule ; une portion structurelle (5) située au-dessous de ladite portière ; et un couvercle (12) recouvrant ladite portion structurelle (5) et comprenant une portion (14) recouvrant au moins partiellement et connectée solidement à ladite portion structurelle, selon la revendication 1.

8. Véhicule selon la revendication 7, **caractérisé en ce que** ladite portion structurelle (5) définit un évidement externe allongé (10) et ladite portion concave (15) comprend une paroi latérale recourbée et deux parois terminales logées à l'intérieur dudit réduit externe allongé (10) de ladite portion structurelle (5).
